# EUROPEAN PATENT APPLICATION

(11) **EP 4 572 104 A1**
(43) Date of publication of application: **18.06.2025**
(21) Application number: 24218411.7
(22) Date of filing: 09.12.2024
(51) Int. Cl.: H02K 5/20, H02K 9/19

(54) **ELECTRIC MACHINE AND VEHICLE WITH IMPROVED COOLING SYSTEM**

(30) Priority: 12.12.2023 DE 102023134860
(71) Applicant: Valeo eAutomotive Germany GmbH, 91056 Erlangen (DE)
(72) Inventor: GAMAL, Khader, 91056 Erlangen (DE)
(74) Representative: Valeo Powertrain Systems

(57) **Abstract**

An electric machine (1, 1a..1c) is disclosed, which comprises a machine housing (2a..2c), a stator (3) and a rotor (5). Stator windings (7) comprise a stack section (B), in which they run within the stator lamination stack (6), and stator winding heads (C, C'), where they run out of the stack section (B). The machine housing (2a..2c) comprises a first cooling system (9) based on a first cooling fluid around the stator lamination stack (6) and a separate second cooling system (10, 10') based on a separate second cooling fluid. The separate second cooling system (10, 10') comprises spray nozzles or bores (11, 11'), which are directed towards at least one of the stator winding heads (C, C'). Furthermore, a vehicle (23) with such an electric machine (1, 1a.. 1c) is disclosed.

## Description

### TECHNICAL FIELD

The invention relates to an electric machine, which comprises a machine housing, a stator fixedly arranged in the machine housing, a rotor shaft and a rotor mounted on the rotor shaft, by which the rotor is rotatably arranged in the machine housing around a rotor axis. The stator comprises a stator lamination stack and stator windings arranged therein, wherein the stator windings comprise a stack section, in which they run within the stator lamination stack, and stator winding heads, where they run out of the stack section, for example in a bow shape. Moreover, the machine housing comprises a first cooling system based on a first cooling fluid around the stator lamination stack. Further on, the invention relates to a vehicle, driven by an electric machine of the above kind.

### BACKGROUND ART

An electric machine and a vehicle of the above kinds are generally known. Often, an electric machine has to be cooled, lubricated and shall be protected against oxidation. However, these different functions have very specific demands, and providing the same at a high level at the same time is hard to achieve. So, usually a tradeoff between the functions is done, what also means that often the potential of an electric machine is not fully exploited.

### DISCLOSURE OF INVENTION

Accordingly, an object of the invention is to provide an improved electric machine and an improved vehicle. In particular, a solution shall be proposed, which allows for cooling and lubrication of an electric machine as well as for avoiding of oxidation in the interior of the same.

The object of the invention is solved by an electric machine as disclosed in the opening paragraph, wherein the machine housing additionally comprises a separate second cooling system based on a separate second cooling fluid, wherein the separate second cooling system comprises spray nozzles or bores, which are directed towards at least one of the stator winding heads. The spray nozzles or bores can be directed towards just one of the stator winding heads or to both stator winding heads.

The object of the invention is also solved by a vehicle comprising an electric machine of the above kind which is designed to propel the vehicle. For example the first cooling system of the electric machine can be part of a first cooling circuit of the vehicle, and the second cooling system can be part of a separate second cooling circuit of the vehicle.

By use of the proposed measures, the functions of cooling, lubrication and oxidation protection can be provided at a very high level at the same time. Generally, the first cooling fluid can be water based and the second cooling fluid can be oil based. In this way, on the one hand, a highly efficient cooling can be realized in the stack section of the stator, and on the other hand, in addition the stator winding heads can be cooled and a lubricant can be brought into the interior of the electric machine. It should be noted in this context that the thermal capacity of a water based cooling fluid is much higher than the thermal capacity of oil. Accordingly, also a cooling power of the first cooling system is higher than a cooling power of the second cooling system in this case. By the proposed measures, also unwanted oxidation can be avoided in the interior of the electric machine. Accordingly, the whole potential of an electric machine can be exploited.

Further advantageous embodiments are disclosed in the claims and in the description as well as in the figures.

In one embodiment, the machine housing can comprise a tube like section around the stator and end sections closing the tube like section, wherein the machine housing in the tube like section comprises
- an inner housing part,
- an outer housing part, which is located radially outwards of the inner housing part,
- a first cooling channel of the first cooling system, wherein the first cooling channel is formed between the inner housing part and the outer housing part, and
- a second cooling channel of the second cooling system and tube section spray nozzles or bores hydraulically connected thereto, which are directed towards at least one of the stator winding heads, wherein the second cooling channel is formed between the inner housing part and the outer housing part, too.

In this way, the tube section spray nozzles or bores are directed radially inwards and spray the second cooling fluid on a radially outer side of the stator winding head(s).

Preferably, the second cooling system in at least one of the end sections can comprise a cooling channel and end section spray nozzles or bores hydraulically connected thereto, which are directed towards at least one of the stator winding heads. In this way, end section spray nozzles or bores are provided, which are directed axially inwards and spray the second cooling fluid on a front face of the stator winding head(s). Accordingly, cooling can be improved even more.

In yet another advantageous embodiment of the electric machine, the second cooling system can comprise an axial central shaft bore in the rotor shaft and rotor shaft spray nozzles or bores hydraulically connected thereto, which are directed towards at least one of the stator winding heads. Accordingly, the rotor shaft spray nozzles or bores are directed radially outwards and spray the second cooling fluid on a radially inner side of the stator winding head(s), wherein a rotation of the rotor supports distribution of second cooling fluid. In addition, the second cooling system can also be used for cooling the rotor.

Generally, the
- the course of the first cooling channel can have at least an axial component and can enclose an angle of 0° ≤ α < 90° with the rotor axis viewed in a radial direction and
- the course of the second cooling channel can enclose an angle of 90° ≥ β > α with the rotor axis viewed in a radial direction, wherein in particular β = 90°.

In other words, the first cooling channel runs axially or helically and second channel in particular forms a closed ring.

Moreover, in one embodiment of the electric machine, one of the end sections is one part with the tube like section both forming a pot like section, whereas in another embodiment, the tube like section and the end sections are separate parts. That means, for the first variant just one additional bearing shield is needed, whereas two bearing shields are needed for the second variant.

### BRIEF DESCRIPTION OF DRAWINGS

The invention now is described in more detail hereinafter with reference to particular embodiments, which the invention however is not limited to.
- Fig. 1: shows a half sectional view of a first exemplary electric machine;
- Fig. 2: like Fig. 1 but with additional front sided spray nozzles;
- Fig. 3: like Fig. 2 but with additional spray nozzles in the rotor shaft;
- Fig. 4: a detailed oblique view of an exemplary inner housing part from the side;
- Fig. 5: the inner housing part of Fig. 4 viewed more from the front and
- Fig. 6: shows a schematic view of an electric vehicle.

### DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure.

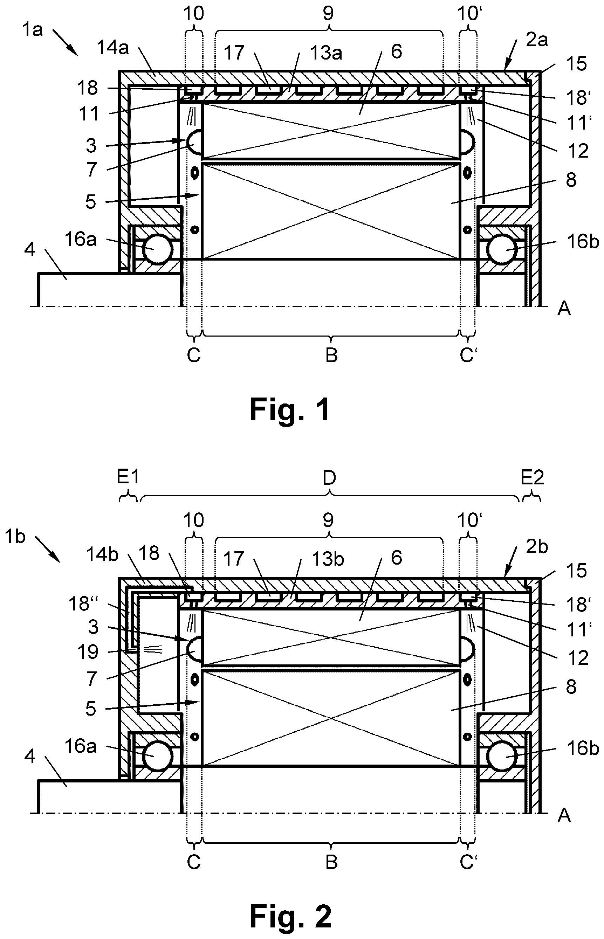

Fig 1 shows a half sectional view of an electric machine 1, which comprises a machine housing 2a, a stator 3 fixedly arranged in the machine housing 2a, a rotor shaft 4 and a rotor 5 mounted on the rotor shaft 4, by which the rotor 5 is rotatably arranged in the machine housing 2a around a rotor axis A. The stator 3 comprises a stator lamination stack 6 and stator windings 7 arranged therein. The rotor 5 comprises a rotor lamination stack 8, in which rotor windings or rotor magnets can be arranged (not shown).

The stator windings 7 comprise a stack section B, in which they run within the stator lamination stack 6, and stator winding heads C, C', where they run out of the stack section B and where they can have a bow shape. Moreover, the electric machine 1 in the machine housing 2a comprises a first cooling system 9 based on a first cooling fluid around the stator lamination stack 6, and a separate second cooling system 10, 10' based on a separate second cooling fluid. The separate second cooling system 10, 10' runs over the entire circumference of the machine housing 2a. The separate second cooling system 10, 10' comprises spray nozzles or bores 11, 11', which are directed towards both stator winding heads C, C'. In the example of Fig. 1, the spray nozzles or bores 11, 11' are directed radially inwards towards both stator winding heads C, C'. Spray jets 12 indicate that the second cooling fluid is sprayed on a radially outer side of the stator winding heads C, C'. Advantageously, the spray nozzles or bores 11, 11' are distributed all over the entire circumference of the machine housing 2a, in particular, an inner housing 13a.

The machine housing 2a in detail comprises an inner housing part 13a and an outer housing part 14a, which is located radially outwards of the inner housing part 13a. Moreover, the machine housing 2a comprises a bearing shield 15, wherein bearings 16a, 16b for supporting the rotor shaft 4 are arranged in the outer housing part 14a and in the bearing shield 15. The machine housing 2a additionaly comprises a first cooling channel 17 and second cooling channels 18, 18'. The first cooling channel 17 is part of the first cooling system 9 and formed between the inner housing part 13a and the outer housing part 14a. The second cooling channels 18, 18' are part of the second cooling system 10, 10' and formed between the inner housing part 13a and the outer housing part 14a as well. Additionally, the second cooling channels 18, 18' are hydraulically connected to the spray nozzles or bores 11, 11'.

In the example of Fig. 1, there are two second cooling channels 18, 18' with connected spray nozzles or bores 11, 11', which are directed towards both stator winding heads C, C'. However, it may also be the case that there is just one cooling channel 18, 18' with connected spray nozzles or bores 11, 11', which are directed towards just one of the stator winding heads C, C'

Generally, the first cooling fluid can be water based and the second cooling fluid can be oil based. In this way, on the one hand, a highly efficient cooling can be realized in the stack section B of the stator 5, and on the other hand, in addition the stator winding heads C, C' can be cooled and a lubricant can be brought into the interior of the electric machine 1. It should be noted in this context that the thermal capacity of a water based cooling fluid is much higher than the thermal capacity of oil. By the proposed measures, also unwanted oxidation can be avoided in the interior of the electric machine 1.

Fig. 2 now shows another example of an electric machine 1b, which is similar to the electric machine 1a shown in Fig. 1. In contrast, the second cooling system 10 additionally comprises a cooling channel 18" and end section spray nozzles or bores 19 hydraulically connected thereto, which are directed towards at least one of the stator winding heads C, C'. In detail, the end section spray nozzles or bores 19 are directed axially inwards and spray the second cooling fluid on a front face of the stator winding head C.

In general, the machine housing 2a, 2b of the electric machine 1a, 1b can comprise a tube like section D around the stator 3 and end sections E1, E2 closing the tube like section D, wherein the inner housing part 13a and the outer housing part 14a preferably are part of the tube like section D, like this is depicted in Fig. 2. In the example of Fig. 2, the cooling channel 18" is solely arranged in the end section E1. However, there may also be an additional cooling channel 18" in the end section E2.

In the examples of Figs. 1 and 2, one of the end sections E1, E2 (the end section E1) is one part with the tube like section D both forming a pot like section. However, the tube like section D and the end sections E1, E2 may be separate parts, meaning that the electric machine 1 may comprise two bearing shields 15.

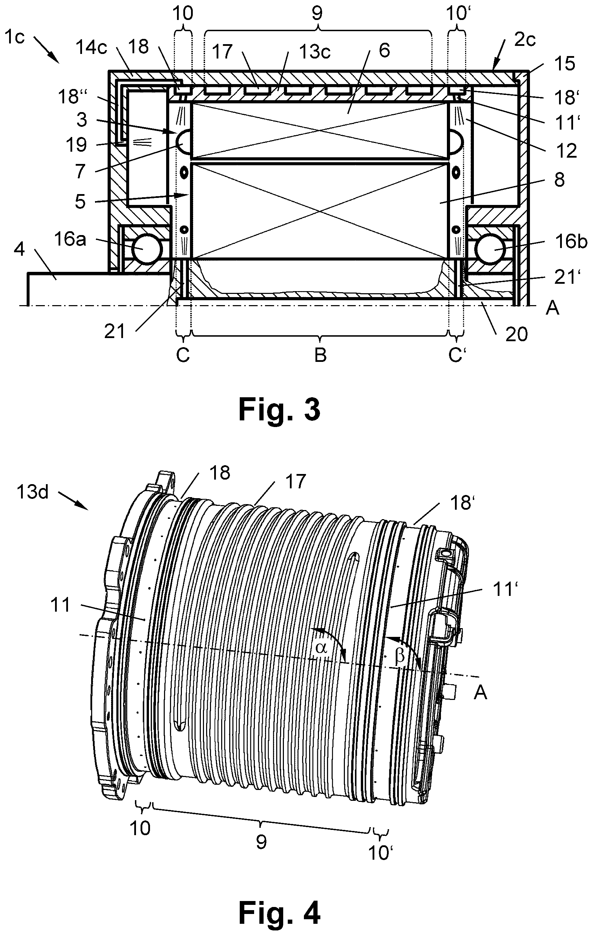

Fig. 3 now shows yet another example of an electric machine 1c, which is similar to the electric machine 1b shown in Fig. 2. In contrast, the second cooling system 10, 10' comprises an axial central shaft bore 20 in the rotor shaft 4 and rotor shaft spray nozzles or bores 21, 21' hydraulically connected thereto, which are directed towards the stator winding heads C, C'. Accordingly, the rotor shaft spray nozzles or bores 21, 21' are directed radially outwards and spray the second cooling fluid on a radially inner side of the stator winding heads C, C'. The rotation of the rotor 5 supports distribution of second cooling fluid. In addition, the rotor 5 can be cooled by the rotor shaft spray nozzles or bores 21, 21'.

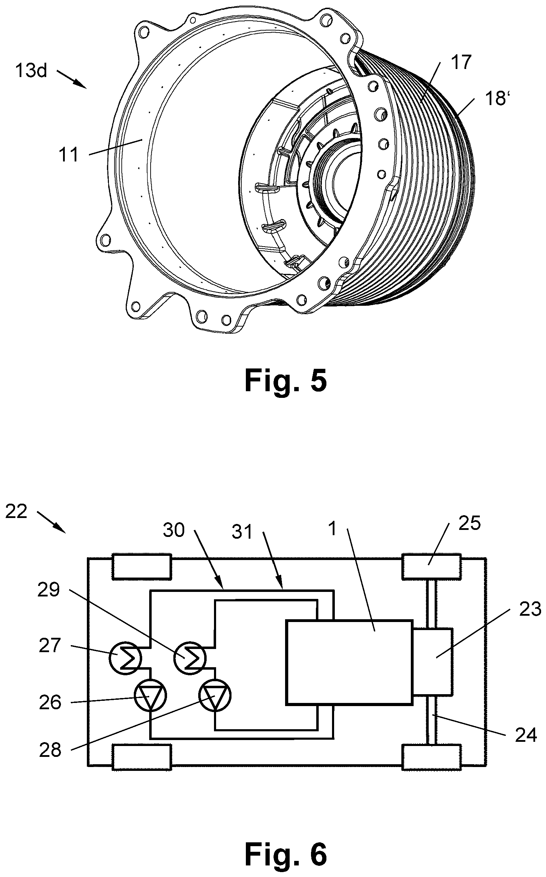

Figs. 4 and 5 now show different angular views of an inner housing part 13d, Fig. 4 from the side and Fig. 5 more from the front. As can particularly be seen in Fig. 4, the course of the first cooling channel 17 preferably at least has an axial component and can enclose an angle of 0° ≤ α < 90° with the rotor axis A viewed in a radial direction. Moreover, the course of the second cooling channel 18, 18' can enclose an angle of 90° ≥ β > α with the rotor axis A viewed in a radial direction. In particular, β can be 90°. In other words this means that the first cooling channel 17 can run axially or helically and second channels 18, 18' in particular can form closed rings.

Advantageously, the inner housing 13d comprises on one axial end a first flange extending radially. The first flange comprises an axial outlet (not shown) for the second cooling fluid. On the other axial end, the inner housing 13d comprises external radial extensions (i.e the radial extensions extend from the inner housing away from the shaft). The radial extensions are designed to be put in contact with corresponding parts of another flange and/or the outer housing 14a.

Fig. 6 finally shows an electric vehicle 22 with an electric machine 1 of the kind as defined hereinbefore, which is provided to propel the electric vehicle 25. In detail, the electric machine 1 is coupled to a gearbox 23, side shafts 24 and finally to the wheels 25. The electric machine 1 may be provided for powering the electric vehicle 22 permanently in a pure electric car or intermittently, e.g. in combination with a combustion engine in a hybrid car.

Further on, the electric vehicle 22 comprises a first pump 26, a first cooler 27, a second pump 28 and a second cooler 29. The first pump 26, the first cooler 27 and the first cooling system 9 of the electric machine 1 are part of a first cooling circuit 30 of the vehicle 22. The second pump 28, the second cooler 29 and the second cooling system 10, 10' of the electric machine 1 are part of a second cooling circuit 31 of the vehicle 22. In this way, the first cooling fluid and the second cooling fluid can work independently.

It is also noted that the invention is not limited to the embodiments disclosed hereinbefore, but combinations of the different variants are possible. In reality, the electric machine 1, 1a..1c and the electric vehicle 22 may have more or less parts than shown in the figures. It is also noted that the electric machine 1, 1a..1c and the electric vehicle 22 or parts thereof are not necessarily drawn to scale in the Figs. Moreover, the description may comprise subject matter of further independent inventions.

Finally, it should be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### List of References

- 1, 1a..1c: electric machine
- 2a..2c: machine housing
- 3: stator
- 4: rotor shaft
- 5: rotor

- 6: stator lamination stack
- 7: stator winding
- 8: rotor lamination stack
- 9: first cooling system
- 10, 10': second cooling system

- 11, 11': tube section spray nozzles / bores
- 12: spray jet
- 13a..13d: inner housing part
- 14a..14c: outer housing part
- 15: bearing shield

- 16a, 16b: (roller)bearing
- 17: first cooling channel
- 18..18": second cooling channel
- 19: end section spray nozzles / bores
- 20: central shaft bore

- 21, 21': rotor shaft spray nozzles / bores
- 22: vehicle
- 23: gearbox
- 24: side shaft
- 25: wheel

- 26: first pump
- 27: first cooler
- 28: second pump
- 29: second cooler
- 30: first cooling circuit
- 31: second cooling circuit

- A: rotor axis
- B: stack section
- C, C': stator winding head
- D: tube like section
- E1, E2: end section
- α: angle between course of first cooling channel and rotor axis
- β: angle between course of second cooling channel and rotor axis

## Claims

1. Electric machine (1, 1a..1c), comprising a machine housing (2a..2c), a stator (3) fixedly arranged in the machine housing (2a..2c), a rotor shaft (4) and a rotor (5) mounted on the rotor shaft (4), by which the rotor (5) is rotatably arranged in the machine housing (2a..2c) around a rotor axis (A),
- wherein the stator (3) comprises a stator lamination stack (6) and stator windings (7) arranged therein,
- wherein the stator windings (7) comprise a stack section (B), in which they run within the stator lamination stack (6), and stator winding heads (C, C'), where they run out of the stack section (B) and
- wherein the machine housing (2a..2c) comprises a first cooling system (9) based on a first cooling fluid around the stator lamination stack (6),
**characterized in that**
- the machine housing (2a..2c) comprises a separate second cooling system (10, 10') based on a separate second cooling fluid, wherein the separate second cooling system (10, 10') comprises spray nozzles or bores (11, 11'), which are directed towards at least one of the stator winding heads (C, C').

2. Electric machine (1, 1a..1c) as claimed in claim 1, **characterized in that** the first cooling fluid is water based and the second cooling fluid is oil based.

3. Electric machine (1, 1a..1c) as claimed in claim 1 or 2, **characterized in that** the spray nozzles or bores (11, 11') are directed towards both stator winding heads (C, C').

4. Electric machine (1, 1a..1c) as claimed in claim 1 to 3, **characterized in that** the machine housing (2a..2c) comprises a tube like section (D) around the stator (3) and end sections (E1, E2) closing the tube like section (D), wherein the machine housing (2a..2c) in the tube like section (D) comprises
- an inner housing part (13a..13d),
- an outer housing part (14a..14c), which is located radially outwards of the inner housing part (13a..13d),
- a first cooling channel (17) of the first cooling system (9), wherein the first cooling channel (17) is formed between the inner housing part (13a.. 13d) and the outer housing part (14a..14c), and
- a second cooling channel (18, 18') of the second cooling system (10, 10') and tube section spray nozzles or bores (11, 11') hydraulically connected thereto, which are directed towards at least one of the stator winding heads (C, C'), wherein the second cooling channel (18, 18') is formed between the inner housing part (13a..13d) and the outer housing part (14a.. 14c), too.

5. Electric machine (1, 1a..1c) as claimed in claim 4, **characterized in that**
- the course of the first cooling channel (17) at least has an axial component and encloses an angle of 0° ≤ α < 90° with the rotor axis (A) viewed in a radial direction and
- the course of the second cooling channel (18, 18') encloses an angle of 90° ≥ β > α with the rotor axis (A) viewed in a radial direction, wherein in particular β = 90°.

6. Electric machine (1, 1a..1c) as claimed in claim 4 or 5, **characterized in that** the second cooling system (10, 10') in at least one of the end sections (E1, E2) comprises a cooling channel (18") and end section spray nozzles or bores (19) hydraulically connected thereto, which are directed towards at least one of the stator winding heads (C, C').

7. Electric machine (1, 1a..1c) as claimed in any one of claims 4 to 6, **characterized in that**
- one of the end sections (E1, E2) is one part with the tube like section (D) both forming a pot like section or
- the tube like section (D) and the end sections (E1, E2) are separate parts.

8. Electric machine (1, 1a..1c) as claimed in any one of claims 1 to 7, **characterized in that** the second cooling system (10, 10') comprises an axial central shaft bore (20) in the rotor shaft (4) and rotor shaft spray nozzles or bores (21, 21') hydraulically connected thereto, which are directed towards at least one of the stator winding heads (C, C').

9. Vehicle (22), driven by an electric machine (1, 1a..1c) as claimed in any one of claims 1 to 8.

10. Vehicle (22) according to claim 9, **characterized in that** the first cooling system (9) is part of a first cooling circuit (30) of the vehicle (22), and the second cooling system (10, 10') is part of a separate second cooling circuit (31) of the vehicle (22).
